# EUROPÄISCHE PATENTANMELDUNG

(11) **EP 2 226 144 A1**
(43) Veröffentlichungstag der Anmeldung: **08.09.2010**
(21) Anmeldenummer: 09003186.5
(22) Anmeldetag: 05.03.2009
(51) Int. Cl.: B23D 31/04

(54) **Vorrichtung zum Auffangen und Ausleiten von dünnen Werkstückstreifen sowie Profiliermaschine mit einer solchen Vorrichtung**

(71) Anmelder: DREISTERN GmbH & Co.KG, 79650 Schopfheim (DE)
(72) Erfinder: Ganter, Wolfgang, 79585 Steinen (DE); Grüllich, Christoph, 79650 Schopfheim (DE); Karle, Erwin, 79677 Aitem (DE); Oswald, Jürgen, 79650 Schopfheim (DE); Brombacher, Markus, 79650 Schopfheim (DE); Becker, Rudolf, 79650 Schopfheim (DE); Grether, Hans-Peter, 79650 Schopfheim (DE)
(74) Vertreter: Lemcke, Brommer & Partner

(57) **Zusammenfassung**

Die vorliegende Erfindung befasst sich mit dem Problem, dass in In-Line-Fertigungsanlagen, insbesondere Profiliermaschinen, oft quasi endlose Werkstücke durch Längsabschneiden von Werkstückstreifen bearbeitet werden müssen. Der abgeschnittene Werkstückstreifen (17) muss kontinuierlich aus der Fertigungsanlage herausgeführt und entsorgt werden.
Die erfindungsgemäß vorgeschlagene Lösung besteht aus einer Absaugeinrichtung (4,6) mit Saugstutzen (1), wobei der Saugstutzen (1) den Werkstückstreifen (17) einsaugt und gegebenenfalls dessen Ende einfängt, falls ein Streifenriss stattgefunden hat. Der Werkstückstreifen (17) wird vorzugsweise über ein Rohr- oder Schlauchsystem (2) in einen Zerkleinerer (5) gefördert, wobei der Zerkleinerer in der Absaugeinrichtung (4,6) angeordnet ist. Die im Zerkleinerer (5) entstandenen Späne (3) durchlaufen eine Vakuumschleuse (8) und können dort in einer Verpresseinrichtung (11) verdichtet werden.

## Beschreibung

Die Erfindung betrifft eine Vorrichtung zum Auffangen und Ausleiten von dünnen Werkstückstreifen nach dem Oberbegriff des Anspruchs 1 sowie eine Profiliermaschine mit einer solchen Vorrichtung nach dem Oberbegriff des Anspruchs 7.

Eine Profiliermaschine, die das bevorzugte Anwendungsgebiet der vorliegend vorgeschlagenen Vorrichtung ist, dient zum Längsumformen eines quasi endlosen Werkstückbandes oder Ausgangsprofils zu einem Profil oder Rohr. Hierzu umfasst die Profiliermaschine eine Anzahl von in Linie hintereinander angeordneten Umformstationen mit Rollformwerkzeugen. Das Werkstückband oder Ausgangsprofil durchläuft in jeder Umformstation zwei oder mehr zusammenwirkende Rollformwerkzeuge und erfährt hierbei schrittweise eine Längsumformung zum beabsichtigten Profil oder Rohr.

Insbesondere dann, wenn ein Rohr hergestellt werden soll, beispielsweise aus einem Aluminium-Werkstoff, kann es notwendig sein, vor dem Herstellen der Längsschweißnaht zum Schließen des Rohres die zusammenzufügenden Ränder des Werkstücks fortlaufend abzuschneiden und so von Oxidschichten zu befreien und beschädigte Bandkanten zu beseitigen. Dies erfolgt üblicherweise mittels Durchlaufens eines Schneidrollenpaars pro abzutrennendem Randstreifen.

Die fortlaufend abgetrennten Randstreifen bzw. Werkstückstreifen müssen aus der Profiliermaschine ausgeleitet werden, so dass sie nicht mit dem fortlaufend weitertransportierten Werkstück mittransportiert werden und beispielsweise in die Schweißstation gelangen; denn spätestens dort würden sie eine Störung verursachen, die zum vorübergehenden Produktionsstillstand führt. Ein Produktionsstillstand ist jedoch sehr nachteilig, insbesondere dann, wenn beispielsweise Verbundrohre aus Aluminium mit aufextrudiertem Kunststoff hergestellt werden; denn beim Extrudieren ist jeder Stillstand der vorgelagerten Profiliermaschine höchst problematisch.

Bislang werden derartig vom quasi endlos durch die In-Line-Fertigungsanlage, insbesondere Profiliermaschine transportierten Werkstück abgeschnittenen Werkstückstreifen nach dem Abtrennvorgang aus der Fertigungsanlage ausgeleitet und auf eine Haspel aufgewickelt oder über einen Häcksler mit Einzugswalzen zerkleinert. Problematisch ist dies immer dann, wenn der ausgeleitete Werkstückstreifen reißt oder beispielsweise an einer Stelle, an der die Werkstückkante beschädigt ist, unterbrochen wird. Denn dies führt dazu, dass ein neues Werkstückstreifen-Vorderende entsteht, das nicht automatisch auf die Haspel oder zum Häcksler geführt wird, sondern ungerichtet weitergeschoben wird, was insbesondere dazu führen kann, dass der Werkstückstreifen zurück in die Profiliermaschine oder die Schweißstation gelangt und Betriebsstörungen verursacht. Daher ist es bislang notwendig, dass eine Person die Ausleitung und das Aufwickeln der abgeschnittenen Werkstückstreifen auf die Haspel überwacht und bei einer etwaigen Unterbrechung des Werkstückstreifens das neu entstandene Vorderende ergreift und zur Haspel führt. Es liegt auf der Hand, dass dies mit einer erheblichen Verletzungsgefahr für die genannte Person verbunden ist. Außerdem ist die Überwachung durch eine Überwachungsperson fehleranfällig und kostenintensiv.

Der vorliegenden Erfindung liegt daher die Aufgabe zugrunde, die beschriebene bisherige Technik zum Auffangen und Ausleiten von abgeschnittenen Werkstückstreifen zu vereinfachen und zu verbessern.

Gelöst ist diese Aufgabe durch eine Vorrichtung mit den Merkmalen des Anspruchs 1 und eine Profiliermaschine mit den Merkmalen des Anspruchs 8.

Bevorzugte Weiterbildungen der erfindungsgemäßen Vorrichtung finden sich in den Ansprüchen 2 bis 6; eine bevorzugte Verwendung dieser Vorrichtung ist im Anspruch 7 definiert. Vorteilhafte Ausgestaltungen der erfindungsgemäßen Profiliermaschine sind in den Ansprüchen 9 bis 13 niedergelegt.

Mit der vorliegenden Erfindung wird es also möglich, eine Vorrichtung zum Auffangen und Ausleiten von dünnen, abgeschnittenen Werkstückstreifen der eingangs genannten Art sowie eine Profiliermaschine mit einer solchen Vorrichtung zu betreiben, ohne eine Überwachungsperson zur laufenden Überwachung der Ausleitung des Werkstückstreifens, insbesondere bei einem Riss oder einer Unterbrechung des Werkstückstreifens, abstellen zu müssen. Denn erfindungsgemäß ist vorgesehen, zum Auffangen und Ausleiten des abgeschnittenen Werkstückstreifens eine Absaugeinrichtung zu verwenden. Diese verfügt über einen Saugstutzen, der in unmittelbare Nähe desjenigen Bereichs der In-Line-Fertigungsanlage bzw. der Profiliermaschine bringbar ist, in dem der Werkstückstreifen abgeschnitten wird; im Falle einer Profiliermaschine mit mindestens einem Schneidrollenpaar zum Längsabtrennen eines Werkstückstreifens also in unmittelbare Nähe dieses Schneidrollenpaars. Falls der Werkstückstreifen nach seinem Abtrennen oder beim Abtrennen reißt oder sonst wie unterbrochen wird, ist der Abstand des hierdurch entstandenen neuen Werkstückstreifen-Endes zum Saugstutzen demnach nur relativ gering. Aufgrund der Saugwirkung der Absaugeinrichtung ist gewährleistet, dass dieses etwaige Werkstückstreifen-Ende in den Saugstutzen hineingesaugt und nicht etwa an ihm vorbeigefördert wird. Ein Rohr- oder Schlauchsystem sorgt im Anschluss an den Saugstutzen für eine Zwangsführung des abgetrennten Werkstückstreifens, so dass auch hier keine Gefahr mehr besteht, dass der Werkstückstreifen reißt und in der Folge nicht mehr ordnungsgemäß entsorgt - bisher auf eine Haspel aufgewickelt - wird.

Mit der vorliegenden Erfindung ist es also nicht mehr notwendig, das ordnungsgemäße Auffangen und Ausleiten des abgetrennten Werkstückstreifens laufend zu überwachen und gegebenenfalls von Hand einzugreifen, wenn eine Werkstückstreifen-Unterbrechnung erfolgt. Neben diesem erheblichen Vorteil ergibt sich hieraus der weitere Vorteil, dass die Materialstärke des abgetrennten Werkstückstreifens deutlich geringer gewählt werden kann als bislang üblich. Denn bislang hat man, beispielsweise bei der Aluminiumrohr-Produktion, deutlich mehr von den miteinander zu verschweißenden Kanten als Randstreifen abgeschnitten (üblicherweise 2 bis 5 Millimeter) als es zur Erzielung einer Oxidfreiheit der miteinander zu verschweißenden Kanten notwendig wäre. Dies musste bislang sein, um die Wahrscheinlichkeit des Reißens des Werkstückstreifens zu minimieren und einen Eingriff der Überwachungsperson möglichst überflüssig zu machen. Wenn nun mit der erfindungsgemäßen Vorrichtung die Dicke des abgetrennten Werkstückstreifens minimiert werden kann, da das Reißen des ausgeleiteten Werkstückstreifens kein Problem mehr darstellt, führt dies zu einer signifikanten Materialeinsparung beim Ausgangswerkstück und zu einer Minimierung des Materialausschusses.

Zweckmäßigerweise ist der Saugstutzen der erfindungsgemäßen Vorrichtung zum Auffangen und Ausleiten der Werkstückstreifen mit einem Einfangtrichter versehen. Dieser unterstützt das Einfangen eines durch ein etwaiges Reißen des Werkstückstreifens neu entstandenen Endes desselben. Dieser Einfangtrichter ist sinnvollerweise so an die Form des Schneidrollenpaars angepasst, dass er nahezu bis ganz in den Arbeitsspalt zwischen den beiden Schneidrollen hinein bringbar ist; denn je näher der Einfangtrichter des Saugstutzens an den Ort des Abtrennens des Werkstückstreifens gebracht wird, um so sicherer werden Werkstückstreifenenden eingefangen und in den Saugstutzen hineingeführt sowie durch diesen dann definiert und betriebssicher ausgeleitet.

Besondere Vorteile ergeben sich durch eine Weiterbildung der vorliegenden Erfindung, gemäß der der Saugstutzen über ein Rohr oder einen Schlauch mit der Absaugeinrichtung verbunden ist, wobei das Rohr oder der Schlauch in eine Vakuumkammer mündet. Im Rohr bzw. Schlauch oder in der Vakuumkammer ist ein Zerkleinerer für die ausgeleiteten Werkstückstreifen angeordnet. Die Vakuumkammer kann beispielsweise mit einer Vakuumpumpe oder einem Gebläse mit Unterdruck beaufschlagt werden, so dass sie Teil der Absaugeinrichtung ist, die einen beständigen Luftstrom von außerhalb des Saugstutzen durch den Saugstutzen und das Rohr bzw. den Schlauch hindurch in die Vakuumkammer hinein erzeugt.

Da der ausgeleitete Werkstückstreifen - oder die ausgeleiteten Werkstückstreifenabschnitte - nach dieser Weiterbildung der vorliegenden Erfindung nicht mehr auf eine Haspel aufgewickelt werden, sondern direkt, über das Schlauch- oder Rohrsystem der Absaugeinrichtung zwangsgeführt, einem Zerkleinerer zugeführt werden, sind Risse und sonstige Unterbrechungen des abgetrennten Werkstückstreifens vollkommen unerheblich geworden. Die Materialstärke des abgetrennten Werkstückstreifens kann demnach minimiert werden, ohne die Betriebssicherheit der Anlage zu gefährden. Gleichzeitig bietet das Vorsehen einer solchen Vakuumkammer eine vorteilhafte Pufferfunktion zwischen dem Gebläse bzw. der Pumpe und dem Saugstutzen, da die Vakuumkammer als eine Art Druckspeicher dient.

Vorzugsweise ist die Vakuumkammer mit einer Vakuumschleuse versehen, so dass die im Zerkleinerer entstehenden Materialspäne durch die Vakuumschleuse hindurch aus der Vakuumkammer entnommen und dann entsorgt werden können. Dies erfolgt vorzugsweise unter Ausnutzung der Schwerkraft, indem die Vakuumschleuse unter dem Zerkleinerer angeordnet wird, so dass die Materialspäne durch die Vakuumschleuse hindurch nach unten fallengelassen werden können. Die Entsorgung kann vorzugsweise dadurch erfolgen, dass bei der Vakuumschleuse eine Sammelvorrichtung, im einfachsten Fall ein transportabler Spänecontainer, angeordnet wird. Es kann jedoch vorteilhafterweise auch vorgesehen sein, die Materialspäne nach oder bei ihrem Durchtritt durch die Vakuumschleuse vor Ort zu verdichten und blockweise verpresst zu entsorgen.

Mit der vorliegenden Erfindung wird also insbesondere die Betriebssicherheit einer Profiliermaschine, bei der fortlaufend Werkstückstreifen abgeschnitten und aus der Produktionslinie ausgeleitet werden müssen, erhöht und gleichzeitig der Aufwand wegen des Entfalls einer händischen Überwachung und des Entfalls der Notwendigkeit, von Zeit zu Zeit händisch einzugreifen, verringert. Gleichzeitig wird der durch das Abtrennen von Werkstückstreifen entstehende Materialausschuss minimiert.

Ein Ausführungsbeispiel für eine erfindungsgemäße Vorrichtung zum Auffangen und Ausleiten von dünnen Werkstückstreifen wird im Folgenden anhand der beigefügten Zeichnungen näher beschrieben und erläutert. Es zeigen:
- Figur 1: eine schematische Ansicht eines Ausführungsbeispiels einer erfindungsgemäßen Vorrichtung zum Auffangen und Ausleiten von Werkstückstreifen;
- Figur 2: das Detail A aus Figur 1 in perspektivischer Ansicht;
- Figur 3: eine Schnittdarstellung des Details A.

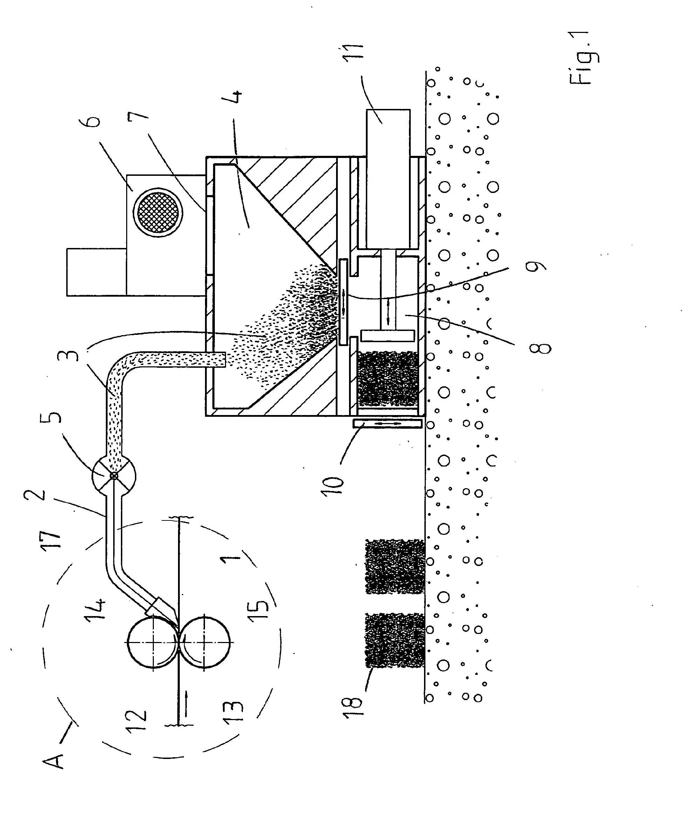

Die in Figur 1 dargestellte Vorrichtung zum Auffangen und Ausleiten von dünnen Werkstückstreifen umfasst einen Saugstutzen 1, ein Rohrsystem 2, das in eine Vakuumkammer 4 mündet, einen innerhalb des Rohrsystems 2 angeordneten Spänezerkleinerer 5 und eine Vakuumpumpe 6, die über einen Ansaugfilter 7 mit der Vakuumkammer 4 verbunden ist. Unterhalb der Vakuumkammer 4 befindet sich eine Vakuumschleuse 8, die durch einen oberen Schleusenschieber 9 und einen unteren Schleusenschieber 10 gebildet wird. Späne 3, die vom Spänezerkleiner 5 in die Vakuumkammer 4 gesogen werden, gelangen durch Öffnen des oberen Schleusenschiebers 9 bedarfsweise in die Vakuumschleuse 8 und werden dort von einer Verpresseinrichtung 11 zu einem Späneblock 18 verpresst. Nach Öffnen des unteren Schleusenschiebers 10 kann dieser aus der Vakuumschleuse 8 entnommen und zur Abholung bzw. Entsorgung bereitgestellt werden. Die Vakuumpumpe 6 sorgt über die Vakuumkammer 4, die als Druckspeicher fungiert, für eine beständige Luftbewegung vom Saugstutzen 1 in die Vakuumkammer 4 und somit für einen Luftstrom im Ansaugbereich des Saugstutzens 1, wodurch gewährleistet wird, dass Werkstückstreifen-Enden zuverlässig in den Saugstutzen 1 eingesaugt und dem Spänezerkleinerer 5 zugeführt werden, auch wenn der auszuleitende Werkstückstreifen 17 reißen sollte.

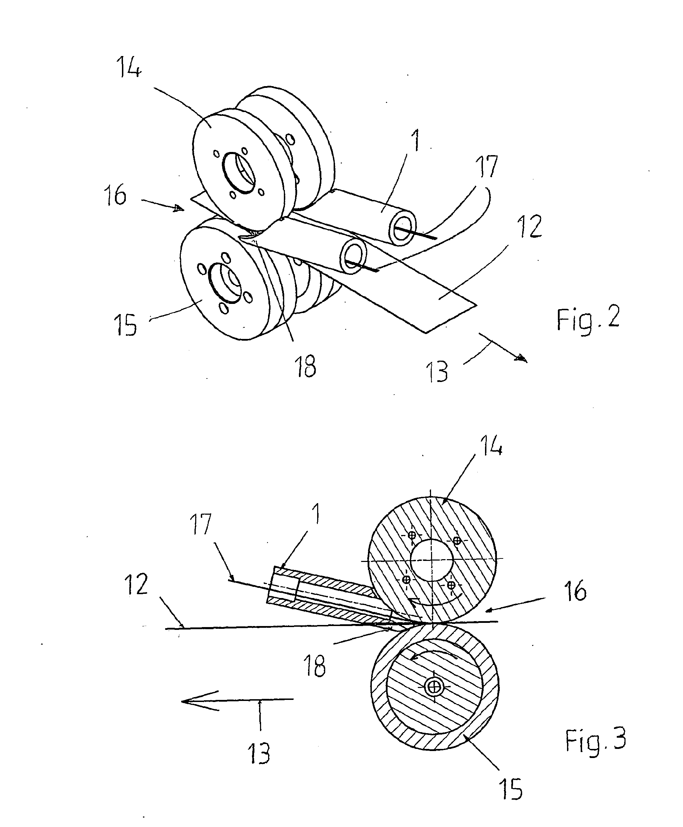

Die Ausgestaltung und der Anbringungsort des Saugstutzens 1 wird anhand der Figuren 2 und 3 klarer, die das Detail A aus Figur 1 in Vergrößerung zeigen, wobei Figur 2 eine perspektivische Ansicht und Figur 3 eine seitliche Schnittdarstellung ist.

Insbesondere in Figur 2 ist zu erkennen, dass ein Werkstückband 12, das in Arbeitsrichtung 13 durch eine (hier nicht dargestellte) In-Line-Fertigungsanlage, insbesondere eine Profiliermaschine, transportiert wird, durch zwei Paare aus oberen Schneidrollen 14 und unteren Schneidrollen 15, die zwischen sich jeweils einen Arbeitsspalt 16 bilden, geführt wird, um an den seitlichen Kanten des Werkstückbandes 12 jeweils einen Werkstückstreifen 17 in Transportrichtung 13 längs abzutrennen. Hierdurch werden die rechten und linken Kanten des Werkstückbandes 12 von Unebenheiten oder von einer etwa störenden Oxidschicht befreit.

Für jeden Werkstückstreifen 17 ist ein Saugstutzen 1 der erfindungsgemäßen Vorrichtung vorgesehen, dessen Form und Funktion anhand Figur 3 am besten zu erkennen ist. Der Saugstutzen 1 verfügt frontseitig über einen Einfangtrichter 18, der jedoch so an die Form der oberen und unteren Schneidrollen 14, 15 angepasst ist, dass er nahezu bis ganz in den Arbeitsspalt 16 zwischen den Schneidrollen 14, 15 eingebracht werden kann, um den Saugstutzen 1 möglichst nahe an denjenigen Bereich der Fertigungsanlage zu bringen, in dem der Werkstückstreifen 17 abgeschnitten wird. Diese räumliche Nähe sorgt im Zusammenhang mit der Saugwirkung des Saugstutzens 1 dafür, dass der Randstreifen 17, nachdem er zwischen den Schneidrollen 14, 15 abgeschnitten worden ist, in jedem Fall in das Innere des Saugstutzens 1 gelangt und von dort über den Schlauch 2 in die Vakuumkammer 4 gefördert wird, auch wenn der Werkstückstreifen 17 nicht kontinuierlich an einem Stück abgeschnitten wird oder gegebenenfalls reißt.

Abschließend sei darauf hingewiesen, dass die erfindungsgemäße Vorrichtung zwar bevorzugt bei einer Profiliermaschine zum Umformen von quasi endlosen, metallischen Werkstücken verwendet wird, jedoch nicht auf diese Verwendung beschränkt ist.

## Patentansprüche

1. Vorrichtung zum Auffangen und Ausleiten von dünnen Werkstückstreifen (17), die von einem quasi endlos durch eine In-Line-Fertigungsanlage, insbesondere eine Profiliermaschine, transportierten Werkstück (12) in Transportrichtung (13) längs abgeschnitten werden,
**dadurch gekennzeichnet,**
**dass** die Vorrichtung einen mit einer Absaugeinrichtung (4, 6) verbundenen Saugstutzen (1) umfasst, welcher in unmittelbarer Nähe desjenigen Bereichs der In-Line-Fertigungsanlage bringbar ist, in dem der Werkstückstreifen (17) abgeschnitten wird.

2. Vorrichtung nach Anspruch 1,
**dadurch gekennzeichnet,**
**dass** der Saugstutzen (1) über ein Rohr oder einen Schlauch (2) mit der Absaugeinrichtung (4, 6) verbunden ist, dass das Rohr oder der Schlauch (2) in eine Vakuumkammer (4) mündet, und dass ein Zerkleinerer (5) im Rohr oder Schlauch (2) oder in der Vakuumkammer (4) angeordnet ist.

3. Vorrichtung nach Anspruch 2,
**dadurch gekennzeichnet,**
**dass** die Vakuumkammer (4) mit einer Vakuumschleuse (8) zur Entnahme von zu Spänen (3) zerkleinerten Werkstückstreifen (17) versehen ist.

4. Vorrichtung nach Anspruch 4,
**dadurch gekennzeichnet,**
**dass** in der oder anschließend an die Vakuumschleuse (8) eine Verpresseinrichtung (11) zum Verdichten, vorzugsweise Verpressen der Späne (3) angeordnet ist.

5. Vorrichtung nach mindestens einem der Ansprüche 1 bis 4,
**dadurch gekennzeichnet,**
**dass** der Saugstutzen (1) mit einem Einfangtrichter (18) versehen ist.

6. Vorrichtung nach Anspruch 5,
**dadurch gekennzeichnet,**
**dass** der Einfangtrichter (18) so an die Form zweier, einen Arbeitsspalt (16) zwischen sich bildenden Schneidrollen (14, 15) angepasst ist, dass er nahezu bis ganz in den Arbeitsspalt (16) hinein bringbar ist.

7. Verwendung einer Vorrichtung nach mindestens einem der Ansprüche 1 bis 6, als Auffang- und Ausleiteinrichtung für einen beim Umformen eines quasi endlosen Werkstücks in einer Profiliermaschine längs abgetrennten Werkstückstreifen.

8. Profiliermaschine zum Längsumformen eines quasi endlosen Werkstückbandes (12) oder Ausgangsprofils zu einem Profil oder Rohr, mit einer Anzahl von in Linie hintereinander angeordneten Umformstationen mit Rollformwerkzeugen, mit mindestens einem Schneidrollenpaar (14, 15) zum Längsabtrennen eines Werkstückstreifens (17), sowie mit einer Vorrichtung zum Auffangen und Ausleiten des Werkstückstreifens (17),
**dadurch gekennzeichnet,**
**dass** die Vorrichtung zum Auffangen und Ausleiten des Werkstückstreifens (17) einen mit einer Absaugeinrichtung (4, 6) verbundenen Saugstutzen (1) umfasst, der in unmittelbare Nähe des Schneidrollenpaars (14, 15) bringbar ist.

9. Profiliermaschine nach Anspruch 8,
**dadurch gekennzeichnet,**
**dass** der Saugstutzen (1) über ein Rohr oder einen Schlauch (2) mit der Absaugeinrichtung (4, 6) verbunden ist, dass das Rohr oder der Schlauch (2) in eine Vakuumkammer (4) mündet, und dass ein Zerkleinerer (5) im Rohr oder Schlauch (2) oder in der Vakuumkammer (4) angeordnet ist.

10. Profiliermaschine nach Anspruch 9,
**dadurch gekennzeichnet,**
**dass** die Vakuumkammer (4) mit einer Vakuumschleuse (8) zur Entnahme von zu Spänen (3) zerkleinerten Werkstückstreifen (17) versehen ist.

11. Profiliermaschine nach Anspruch 10,
**dadurch gekennzeichnet,**
**dass** in der oder anschließend an die Vakuumschleuse (8) eine Verpresseinrichtung (11) zum Verdichten, vorzugsweise Verpressen der Späne (3) angeordnet ist.

12. Profiliermaschine nach mindestens einem der Ansprüche 8 bis 11,
**dadurch gekennzeichnet,**
**dass** der Saugstutzen (1) mit einem Einfangtrichter (18) versehen ist.

13. Profiliermaschine nach Anspruch 12,
**dadurch gekennzeichnet,**
**dass** der Einfangtrichter (18) so an die Form des Schneidrollenpaars (14, 15) angepasst ist, dass er nahezu bis ganz in einen vom Schneidrollenpaar (14, 15) gebildeten Arbeitsspalt (16) hinein bringbar ist.
